# EUROPEAN PATENT SPECIFICATION

(11) **EP 2 212 186 B1**
(45) Date of publication and mention of the grant of the patent: **20.02.2013**
(21) Application number: 08849624.5
(22) Date of filing: 05.11.2008
(51) Int. Cl.: B63B 27/24, B67D 9/02, F17C 6/00, F17C 9/02, B67D 9/00

(54) **METHOD AND OPERATING SYSTEM FOR OPERATING A LNG FUELLED MARINE VESSEL**
VERFAHREN UND BETRIEBSSYSTEM ZUM BETRIEB EINES MIT LNG ANGETRIEBENEN SCHIFFES
PROCÉDÉ ET SYSTÉME DE FONCTIONNEMENT D'UN NAVIRE PROPULSÉ À L'AIDE DE GAZ NATUREL LIQUEFIÉ

(30) Priority: 12.11.2007 FI 20075800
(43) Date of publication of application: 04.08.2010
(73) Proprietor: Wärtsilä Finland Oy, 65380 Vaasa (FI)
(72) Inventor: LEVANDER, Oskar, FI-20900 Turku (FI); SIPILÄ, Tuomas, FI-20880 Turku (FI)
(74) Representative: Brax, Matti Juhani
(86) International application number: PCT/FI2008/050631
(87) International publication number: WO 2009/063127

(56) References cited:
- JP-A- 60 088 298
- US-A1- 2008 153 369

## Description

### Technical field

Method for operating a LNG fuelled marine vessel, which marine vessel comprises a LNG storage tank and a LNG fuelled power plant, in which method LNG is stored in the LNG storage tank, and in which method in connection with a bunkering operation the marine vessel is supplied with LNG by connecting a source of LNG to a bunkering line of the marine vessel and subsequently supplying the marine vessel with LNG through the bunkering line according to the preamble of claim 1. The invention also relates to an operating system according to the preamble of claim 6.

### Background art

Marine vessels can be fuelled by LNG (Liquified Natural Gas). Clearly, as also with LNG, marine vessels need to be refuelled or bunkered at certain intervals. The bunkering operation usually takes place in port, but may also take place at other locations, such as at a floating bunkering facility out at sea.

The bunkering operation of a LNG fuelled marine vessel usually takes a long time. The reason for this is the temperature difference between LNG (normally about -162°C) and the bunkering line (normally in ambient temperature, around +20°C). This temperature difference causes the LNG to boil in the bunkering line, which leads to a two-phase flow of gas and liquid. The two-phase flow causes control problems and pressure pulses, which are harmful for the supply procedure and for the piping arrangements of the bunkering line. Consequently, in order to arrive at a functioning bunkering operation, the LNG flow rate has to be kept very low in the beginning of the operation in order to minimize, or at least in an attempt to keep the pressure pulses at an acceptable level. After the bunkering line starts to cool down, the flow rate may slowly be increased. The bunkering operation consequently takes a very long time.

A typical practice and trend in marine vessel operation of today is shortened port times and high operating speeds, the latter with high energy consumption, which would necessitate a transfer of large amounts of fuel in a short time.

A solution is proposed in JP 60 088 298, which is considered to be the closest prior art and discloses the pre-cooling of a loading arm by a low-temperature gas or gasified liquid which is either vented or re-liquefied.

### Summary of the invention

An object of the present invention is to avoid the drawbacks of the prior art and to provide for an efficient transfer of fuel, particularly LNG, while maintaining a controlled fuel flow. This object is achieved by the method according to claim 1.

The basic idea of the invention is to cool down the bunkering line aboard the marine vessel before the bunkering operation, i.e. before the refuelling of the marine vessel. The bunkering line is advantageously cooled down to a temperature level corresponding to the temperature level of the LNG. This helps to avoid a two-phase flow and to provide for lower pressure pulses in the bunkering line, which as a result provides for a higher flow rate in principle from the beginning of the bunkering operation and consequently for a faster bunkering operation.

The cooling down of the bunkering line is advantageously carried out by circulating LNG from the LNG storage tank through the bunkering line. In this way any auxiliary cooling means are not necessary.

LNG is advantageously pumped from a lower part of the LNG storage tank to the bunkering line of the marine vessel, which in connection with both a pressurized LNG storage tank and a LNG storage tank under hydrostatic pressure ensures that only LNG is re-circulated to the bunkering line. This is preferably carried out before the marine vessel arrives at a bunkering facility.

Advantageously the method also employs a purge connection for emptying the bunkering line of residual LNG.

### Brief Description of Drawings

In the following the invention will be described, by way of example only, with reference to the accompanying schematic drawings, in which
Figure 1 illustrates a first embodiment of the present invention, and
Figure 2 illustrates a second embodiment of the present invention.

### Detailed Description

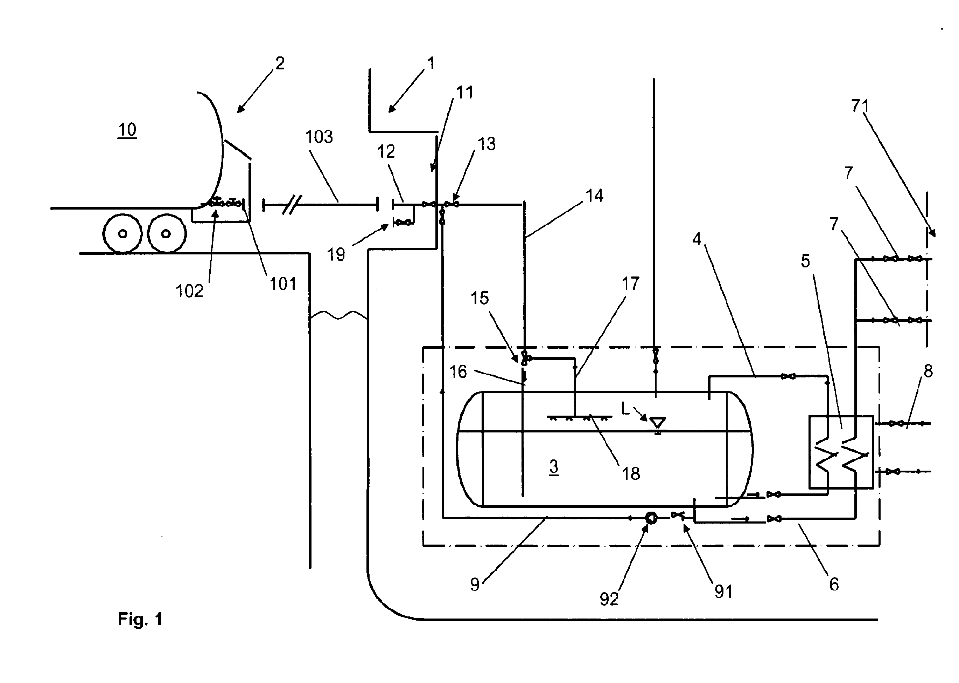

Figure 1, illustrating a first embodiment of the invention, shows a marine vessel 1 at a bunkering facility 2, such as a port. The marine vessel 1 is indicated by a line schematically showing the side shell of the marine vessel. The side shell accommodates a bunker station 11 comprising an inlet pipe 12 with appropriate valve means. The inlet pipe 12 leads to a bunkering line 14, provided with a first emergency shut down valve 13, which in turn leads to a LNG storage tank 3 on the marine vessel 1. The LNG storage tank 3 is connected by way of a discharge conduit 6 and a fuel feed line 7 to a power plant (indicated schematically by reference numeral 71) of the marine vessel 1. A liquid level of the LNG in the LNG storage tank is indicated by reference sign L.

The bunkering line 14, in this embodiment, includes a two-way valve 15, a first branch pipe 16, which is connected to the two-way valve 15 and which opens directly into the LNG storage tank 3, and a second branch pipe 17, which is connected to the two-way valve 15 and which is provided with a nozzle assembly 18 arranged within the LNG storage tank 3. In a normal bunkering or refuelling operation, the LNG is supplied through the branch pipe 16. If the LNG storage tank 3 is empty, and thus at an elevated temperature, LNG can initially be supplied through the second branch pipe 17 so that it can be sprayed by means of the nozzle assembly 18 into the LNG storage tank 3 in order to cool down the LNG storage tank 3.

The inlet pipe 12 is provided with a purge connection 19 in order to empty the inlet pipe 12 and the bunkering line 14 of residual LNG. Purging can be carried out by gas, e.g. N₂.

In this embodiment the LNG storage tank 3 is a pressurized (generally at a pressure of about 5 bar) storage tank and is thus provided with a pressure build-up circuit 4 passing through a heat exchanger 5 in order to maintain a desired pressure in the LNG storage tank 3.

LNG is supplied from the LNG storage tank 3 to the fuel supply line 7 through the discharge conduit 6, which has its inlet in the bottom part of the LNG storage tank 3, below liquid level L. The discharge conduit 6 passes through the heat exchanger 5 in order for the LNG to be vaporized for further transfer to the fuel feed line 7 of the power plant 71 of the marine vessel 1.

Heat is provided to the heat exchanger 5 by means of a heating medium circuit 8.

Further, in this embodiment, a source of LNG is shown in the form of a LNG tanker truck 10 at the port side. The LNG tanker truck 10 is provided with an outlet pipe 101 with appropriate valve means, such as a second emergency shut down valve 102. For establishing a flow connection between the outlet pipe 101 of the LNG tanker truck 10 and the inlet pipe 12 of the bunker station 11 of the marine vessel 1, a bunker connection line 103, e.g. a fuel hose, is provided.

The source of LNG could also be e.g. a storage tank based on land or on a floating support arrangement.

In figure 1, according to the present invention, the bunkering line 14 is also provided with a cooling means. The cooling means comprises the discharge conduit 6 of the LNG storage tank 3, which is also branched off into a cooling line 9 which is in flow connection with the bunkering line 14 through the first emergency shut down valve 13. The cooling line 9 is provided with a cooling line valve 91 and a pump means, in this embodiment a circulation pump 92. This provides for circulating LNG from the LNG storage tank 3 to the bunkering line 14 in order to cool down the bunkering line 14, advantageously to a temperature level corresponding to the temperature level of the LNG. The cooling means, i.e. the cooling line 9 with the cooling line valve 91 and the pump means, i.e. said circulation pump 92 may of course be arranged separately form the discharge conduit 6.

The cooling down of the bunkering line 14 is preferably done before the marine vessel arrives at the bunkering facility 2. In this way bunkering can be started immediately at arrival and be carried out by supplying LNG from the source of LNG at a high flow rate more or less from the beginning, whereby the bunkering operation can be carried out within a short time.

The emergency shut down valves discussed above are advantageous in view of safety criteria with respect to the characteristics of LNG. In addition, the pipes, conduits and lines are preferably double-walled or enclosed in ducts in order to avoid leakage to the surroundings.

In summary, and in view of the above, the operation of the marine vessel can shortly be described as follows.

When the marine vessel 1 is out at sea, the power plant 71, or propulsion machinery, of the marine vessel 1 is driven by vaporized NG (Natural Gas) supplied from the LNG storage tank 3. The LNG is supplied by way of the discharge conduit 6 through the heat exchanger 5, where the LNG is vaporized, so that it is delivered in gas mode (NG) to the fuel feed line 7 (two fuel feed lines in this embodiment, corresponding e.g. to two internal combustion engines) of the propulsion machinery.

When the marine vessel 1 arrives at e.g. its port of destination, in addition to possible unloading and/or loading operations, it needs to be re-fuelled. Refuelling is provided by the LNG tanker truck 10, or e.g. another source of LNG.

In order to be prepared for an efficient refuelling operation, preparatory measures are taken aboard the marine vessel 1 before it arrives in port. The cooling line valve 91 is opened and the circulation pump 92 is started in order to re-circulate LNG from the LNG storage tank 3 to the bunkering line 14 through the cooling line 9, and back to the LNG storage tank 3 by way of the bunkering line 14. The respective valve means in said bunkering line and cooling line are naturally positioned so that fluid communication is established. The circulation pump 92 is run and the LNG is re-circulated for a sufficient time so that the bunkering line 14 is cooled down and so that a desired temperature level (advantageously a temperature level corresponding to the temperature level of the LNG) in the bunkering line 14 is achieved, whereby the re-circulation of the LNG can be discontinued.

When the marine vessel 1 then arrives in port, the bunkering line 14 is at an appropriate temperature to receive the LNG from the LNG tanker truck 10. The outlet pipe 101 of the LNG tanker truck 10 may then be connected by the bunker connection line 103 to the inlet pipe 12 of the bunker station 11 of the marine vessel 1, whereby the bunkering operation can be started and carried out in a short time. As soon as the bunker connection line 103, i.e. the fuel hose, has been cooled down by LNG from the LNG tanker truck 10, the LNG can be delivered at a high flow rate to the cooled down bunkering line 14. It is therefore advantageous that the bunker connection line 103 is short.

The respective valve means are naturally positioned so that fluid communication from the LNG tanker truck 10 to the bunkering line 14 is established. When bunkering is finished, the LNG tanker truck 10 can be disconnected and the respective valve means closed.

If the source of LNG is e.g. a fixed storage tank based on land or on a floating support arrangement, the piping leading from the fixed storage tank to a connection point for the bunker connection line at the dock side could advantageously be cooled down in similar way as described above. This could be carried out by have a re-circulation of LNG provided from the fixed storage tank through the piping leading to the dock side connection point, to which the bunker line connection is to be connected. This operation would be carried out before the marine vessel arrives at port in a corresponding manner as the preparatory measures on the marine vessel.

Consequently, this provides for a fast bunkering operation and a short port time. The marine vessel 1 is then ready for further operation.

The LNG storage tank and the fuel supply arrangement, including components like pumps, heat exchangers, compressors, and valve means, are as such considered to be known by a person skilled in the art and are therefore not described in more detail in this connection.

The different stages of operation described above can be suitable controlled by appropriate automation systems. This is considered to lie within the knowledge of a skilled person in the art and is therefore not discussed in detail in this connection.

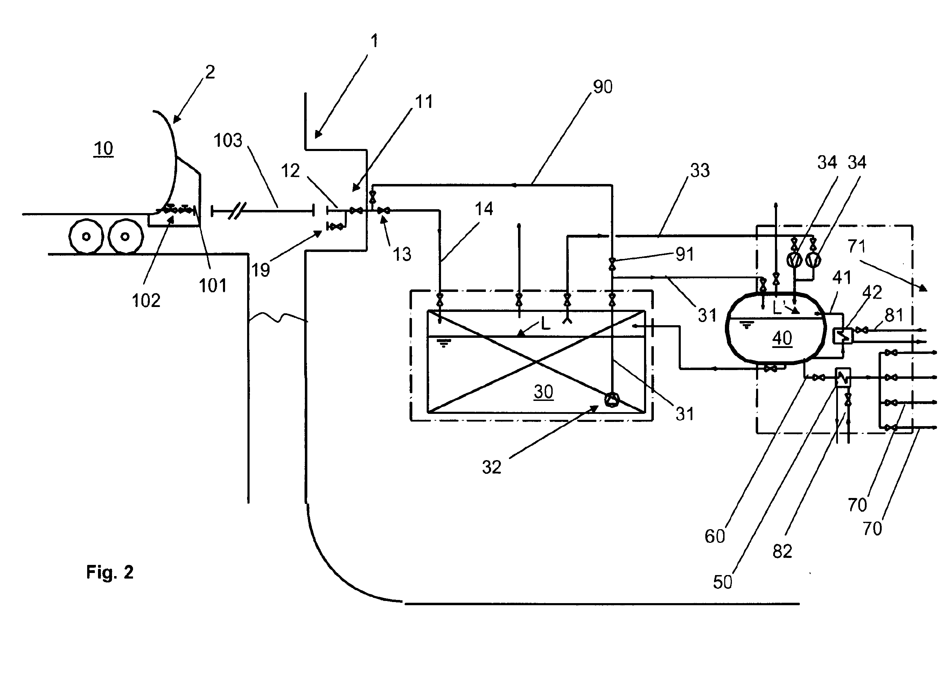

Figure 2, illustrating a second embodiment of the invention, shows a marine vessel 1 at a bunkering facility 2, such as a port. The marine vessel 1 is indicated by a line schematically showing the side shell of the marine vessel. The side shell accommodates a bunker station 11 comprising an inlet pipe 12 with appropriate valve means. The inlet pipe 12 leads to a bunkering line 14, provided with a first emergency shut down valve 13, which in turn leads to a LNG storage tank 30 on the marine vessel 1.

The bunkering line 14 leads directly to the LNG storage tank 30, which is connected to a separate fuel feed tank 40, which is a heat insulated pressure vessel and which is of a considerably smaller size than the LNG storage tank 30. The LNG storage tank 30 is under atmospheric pressure, i.e. in practice under the hydrostatic pressure caused by the LNG. A liquid level of the LNG in the LNG storage tank is indicated by reference sign L.

The inlet pipe 12 is provided with a purge connection 19 in order to empty the inlet pipe 12 and bunkering line 14 of residual LNG. Purging can be carried out by gas, e.g. N₂.

In this embodiment the LNG storage tank 30 is arranged to deliver LNG to the fuel feed tank 40. For this purpose the LNG storage tank 30 is provided with a first fuel supply line 31 comprising a pump means, in this embodiment a supply pump 32, advantageously a cryogenic pump. LNG from the lower part (below the liquid level L) of the LNG storage tank 30 is pumped in liquefied form by the supply pump 32 by way of said first fuel supply line 31 to the fuel feed tank 40 simultaneously raising the pressure. The LNG storage tank 30 is also provided with a second fuel supply line 33, which is arranged in the upper part (above the liquid level L) of the LNG storage tank 30 for capturing and transporting boil-off gas from the LNG storage tank 30 to the fuel feed tank 40. The second fuel supply line 33 is provided with a compressor 34 (in this embodiment two compressors) for pumping the boil-off gas from the low pressure LNG storage tank 30 to the high pressure fuel feed tank 40. The compressor 34 raises the pressure of the boil-off gas to a pressure level prevailing in the fuel feed tank 40. A liquid level of the LNG in the fuel feed tank 40 is indicated by reference sign L'.

The fuel feed tank 40 is provided with a pressure build-up circuit 41 extending from the lower part (below the liquid level L') of the fuel feed tank 40 to the upper part (above the liquid level L') of the fuel feed tank 40 and passing through a first heat exchanger 42 in order to maintain a desired pressure level in the fuel feed tank 40. Heat is provided to the first heat exchanger 42 by means of a first heating medium circuit 81.

LNG is supplied from the fuel feed tank 40 to a fuel feed line 70 through a discharge conduit 60. The discharge conduit 60 passes through a second heat exchanger 50 in order for the LNG to be vaporized for further transfer to the fuel feed line 70 of the power plant 71 of the marine vessel 1. Heat is provided to the second heat exchanger 50 by means of a second heating medium circuit 82.

Further, in this embodiment, a source of LNG is shown in the form of a LNG tanker truck 10 at the port side. The LNG tanker truck 10 is provided with an outlet pipe 101 with appropriate valve means, such as a second emergency shut down valve 102. For establishing a flow connection between the outlet pipe 101 of the LNG tanker truck 10 and the inlet pipe 12 of the bunker station 11 of the marine vessel 1, a bunker connection line 103, e.g. a fuel hose, is provided.

The source of LNG could also be e.g. a storage tank based on land or on a floating support arrangement.

In figure 2, according to the present invention, the bunkering line 14 is provided with a cooling means. The cooling means comprises the first fuel supply line 31 arranged in the LNG storage tank 30, which is also branched of into a cooling line 90, provided with a cooling line valve 91, which is in flow connection with the bunkering line 14 through the first emergency shut down valve 13. LNG is circulated in the cooling line 90 by the pump means, i.e. said supply pump 32. This provides for circulating LNG from the LNG storage tank 30 to the bunkering line 14 in order to cool down the bunkering line 14, advantageously to a temperature level corresponding to the temperature level of the LNG. The cooling means, i.e. the cooling line 90 with the cooling line valve 91 may of course be arranged separately form the first fuel supply line 31, and in that case with a separate pump means.

The cooling down of the bunkering line 14 is preferably done before the marine vessel arrives at the bunkering facility 2. In this way bunkering can be started immediately at arrival and be carried out by supplying LNG from the source of LNG at a high flow rate more or less from the beginning, whereby the bunkering operation can be carried out within a short time.

The emergency shut down valves discussed above are advantageous in view of safety criteria with respect to the characteristics of LNG. Further, the pipes, conduits and lines are preferably double-walled in order to avoid leakage to the surroundings.

In summary, and in view of the above, the operation of the marine vessel can shortly be described as follows.

When the marine vessel 1 is out at sea, the power plant 71, or propulsion machinery, of the marine vessel 1 is driven by vaporized NG (Natural Gas) supplied from the LNG storage tank 30. The LNG is supplied by way of the first fuel supply line 31, provided with the supply pump 32, to the fuel feed tank 40, and further through the discharge line 60 and the heat exchanger 50, where the LNG is vaporized, so that it is delivered in gas mode (NG) to the fuel feed line 70 (four lines in this embodiment, corresponding e.g. to four internal combustion engines) of the propulsion machinery.

When the marine vessel 1 arrives at e.g. its port of destination, in addition to possible unloading and/or loading operations, it needs to be re-fuelled. Refuelling is provided by the LNG tanker truck 10, or e.g. another source of LNG.

In order to be prepared for an efficient refuelling operation, preparatory measures are taken aboard the marine vessel 1 before it arrives in port. The supply pump 32 is run and the cooling line valve 91 is opened in order to re-circulate LNG from the LNG storage tank 30 to the bunkering line 14 through the cooling line 90, and back to the LNG storage tank 30 by way of the bunkering line 14. The respective valve means in said bunkering line and cooling line are naturally positioned so that fluid communication is established. This re-circulation is kept up for a sufficient time so that a desired temperature level (advantageously a temperature level corresponding to the temperature level of the LNG) in the bunkering line 14 is achieved, whereby the re-circulation of the LNG can be discontinued.

When the marine vessel 1 then arrives in port, the bunkering line 14 is at an appropriate temperature to receive the LNG from the LNG tanker truck 10. The outlet pipe 101 of the LNG tanker truck 10 may then be connected by the bunker connection line 103, i.e. the fuel hose, to the inlet pipe 12 of the bunker station 11 of the marine vessel 1. As soon as the bunker connection line 103, i.e. the fuel hose, has been cooled down by LNG from the LNG tanker truck 10, the LNG can be delivered at a high flow rate to the cooled down bunkering line 14. It is therefore advantageous that the bunker connection line 103 is short.

The respective valve means are naturally positioned so that fluid communication from the LNG tanker truck 10 to the bunkering line 14 is established. When bunkering is finished, the LNG tanker truck 10 can be disconnected and the respective valve means closed.

If the source of LNG is e.g. a fixed storage tank based on land or on a floating support arrangement, the piping leading from the fixed storage tank to a connection point for the bunker connection line at the dock side could advantageously be cooled down in similar way as described above. This could be carried out by having a re-circulation of LNG provided from the fixed storage tank through the piping leading to the dock side connection point, to which the bunker line connection is to be connected. This operation would be carried out before the marine vessel arrives at port in a corresponding manner as the preparatory measures on the marine vessel.

Consequently, this provides for a fast bunkering operation and a short port time. The marine vessel 1 is then ready for further operation.

The LNG storage tank, the fuel feed tank, and the fuel supply arrangement, including components like pumps, heat exchangers, compressors, and valve means, are as such considered to be known by a person skilled in the art and are therefore not described in more detail in this connection.

The different stages of operation described above can be suitable controlled by appropriate automation systems. This is considered to lie within the knowledge of a skilled person in the art and is therefore not discussed in detail in this connection.

The description and the drawings related thereto are intended to clarify the basic idea of the invention. The invention may vary in detail within the scope of the ensuing claims.

## Claims

1. Method for operating a LNG fuelled marine vessel, which marine vessel (1) comprises a bunker station (11) comprising an inlet pipe (12) to which a source of LNG is arranged to be connected, a LNG storage tank (3;30) connected to the bunker station (11) and a LNG fuelled power plant (71), in which method in connection with a bunkering operation the marine vessel (1) is supplied with LNG by connecting the source of LNG to a bunkering line (14) of the marine vessel (1) through the inlet pipe (12) of the bunker station (11) and subsequently supplying LNG to the LNG storage tank (3;30) through the bunkering line (14), **characterised in that** the bunkering line (14) is cooled down to a temperature level corresponding to the temperature level of the LNG by re-circulating LNG from a lower part of the LNG storage tank (3;30) to the bunkering line (14) and back to the LNG storage tank (3) by way of the bunkering line (14) before the marine vessel (1) arrives at a bunkering facility (2).

2. Method according to claim 1, **characterised in that** the method employs a purge connection (19) for emptying the bunkering line (14).

3. Operating system for a LNG fuelled marine vessel, which marine vessel (1) comprises a LNG storage tank (3;30), a LNG fuelled power plant (71), a bunker station (11) comprising an inlet pipe (12), and a bunkering line (14) providing a flow connection between the inlet pipe (12) of the bunker station (11) and the LNG storage tank (3;30), **characterised in that** the operating system further comprises a cooling line (9;90), which is connected to a lower part of the LNG storage tank (3;30) and which is connected through a pump means to the bunkering line (14), and **in that** the cooling line (9;90) is arranged for cooling down the bunkering line (14) by re-circulating LNG from a lower part of the LNG storage tank (3:30) to the bunkering line (14) and back to the LNG storage tank (3) by (way of the bunkering line (14) before the marine vessel (1) arrives at a bunkering facility (2).

4. Operating system according to claim 3, **characterised in that** the system comprises a purge connection (19) in flow connection with the bunkering line (14).

5. Operating system according to claim 3, **characterised in that** the LNG storage tank is a pressurized LNG storage tank (3) or a LNG storage tank (30) under hydrostatic pressure.

## Patentansprüche

1. Verfahren zum Betrieb eines mit LNG angetriebenen Schiffs, wobei das Schiff (1) eine Bunkerstation (11), umfassend ein Einlassrohr (12), an dem eine LNG-Quelle zum Anschluss angeordnet wird; einen LNG-Speichertank (3; 30), der mit der Bunkerstation (11) verbunden ist; und ein LNG-betriebenes Antriebsaggregat (71) umfasst, bei welchem Verfahren das Schiff (1) in Verbindung mit einer Bunkerungstätigkeit mit LNG versorgt wird, indem die LNG-Quelle durch das Einlassrohr (12) der Bunkerstation (11) mit einer Bunkerungsleitung (14) des Schiffs (1) verbunden wird und anschließend LNG durch die Bunkerungsleitung (14) in den LNG-Speichertank (3; 30) geliefert wird, **dadurch gekennzeichnet, dass** die Bunkerungsleitung (14) auf einen Temperaturbereich abgekühlt wird, der dem Temperaturbereich des LNG entspricht, indem LNG von einem unteren Teil des LNG-Speichertanks (3; 30) zu der Bunkerungsleitung (14) und durch die Bunkerungsleitung (14) zu dem LNG-Speichertank (3) zurück in Umlauf gebracht wird, bevor das Schiff (1) an einer Bunkerungseinrichtung (2) eintrifft.

2. Verfahren nach Anspruch 1, **dadurch gekennzeichnet, dass** das Verfahren einen Spülanschluss (19) einsetzt, um die Bunkerungsleitung (14) zu leeren.

3. Betriebssystem für ein mit LNG angetriebenes Schiff, wobei das Schiff (1) einen LNG-Speichertank (3; 30), ein LNG-betriebenes Antriebsaggregat (71), eine Bunkerstation (11), die ein Einlassrohr (12) umfasst, und eine Bunkerungsleitung (14), die eine Fließverbindung zwischen dem Einlassrohr (12) der Bunkerstation (11) und dem LNG-Speichertank (3; 30) bereitstellt, umfasst, **dadurch gekennzeichnet, dass** das Betriebssystem ferner eine Kühlleitung (9; 90) umfasst, die mit einem unteren Teil des LNG-Speichertanks (3; 30) verbunden ist und durch ein Pumpenmittel mit der Bunkerungsleitung (14) verbunden ist, und dass die Kühlleitung (9; 90) eingerichtet ist, um die Bunkerungsleitung (14) abzukühlen, indem LNG von einem unteren Teil des LNG-Speichertanks (3; 30) zu der Bunkerungsleitung (14) und durch die Bunkerungsleitung (14) zu dem LNG-Speichertank (3) zurück in Umlauf gebracht wird, bevor das Schiff (1) an einer Bunkerungseinrichtung (2) eintrifft.

4. Betriebssystem nach Anspruch 3, **dadurch gekennzeichnet, dass** das System einen Spülanschluss (19) in einer Fließverbindung mit der Bunkerungsleitung (14) umfasst.

5. Betriebssystem nach Anspruch 3, **dadurch gekennzeichnet, dass** der LNG-Speichertank ein mit Druck beaufschlagter LNG-Speichertank (3) oder ein LNG-Speichertank (30) unter einem hydrostatischen Druck ist.

## Revendications

1. Procédé de fonctionnement d'un navire propulsé à l'aide de gaz naturel liquéfié, lequel navire (1) comprend une installation de soute (11) comprenant un tuyau d'entrée (12) sur lequel une source de gaz naturel liquéfié est agencée pour être raccordée, un réservoir de stockage de gaz naturel liquéfié (3 ; 30) raccordé à l'installation de soute (11) et une installation motrice propulsée à l'aide de gaz naturel liquéfié (71), dans lequel procédé en liaison avec une opération de soutage, le navire (1) est alimenté en gaz naturel liquéfié en raccordant la source de gaz naturel liquéfié à une ligne de soutage (14) du navire (1) via le tuyau d'entrée (12) de l'installation de soute (11) et en fournissant ensuite du gaz naturel liquéfié au réservoir de stockage de gaz naturel liquéfié (3 ; 30) via la ligne de soutage (14), **caractérisé en ce que** la ligne de soutage (14) est refroidie à un niveau de température correspondant au niveau de température du gaz naturel liquéfié par recirculation du gaz naturel liquéfié depuis une partie inférieure du réservoir de stockage de gaz naturel liquéfié (3 ; 30) vers la ligne de soutage (14) et retour vers le réservoir de stockage de gaz naturel liquéfié (3) via la ligne de soutage (14) avant que le navire (1) n'arrive à une installation de soutage (2).

2. Procédé selon la revendication 1, **caractérisé en ce que** le procédé emploie un raccordement de purge (19) pour vider la ligne de soutage (14).

3. Système de fonctionnement d'un navire propulsé à l'aide de gaz naturel liquéfié, lequel navire (1) comprend un réservoir de stockage de gaz naturel liquéfié (3 ; 30), une installation motrice propulsée à l'aide de gaz naturel liquéfié (71), une installation de soute (11) comprenant une conduite d'entrée (12) et une ligne de soutage (14) fournissant une connexion fluidique entre la conduite d'entrée (12) de l'installation de soute (11) et le réservoir de stockage de gaz naturel liquéfié (3 ; 30), **caractérisé en ce que** le système de fonctionnement comprend en outre une ligne de refroidissement (9 ; 90) qui est raccordée à une partie inférieure du réservoir de stockage de gaz naturel liquéfié (3 ; 30) et qui est raccordée via un moyen de pompe à la ligne de soutage (14), et **en ce que** la ligne de refroidissement (9 ; 90) est agencée pour refroidir la ligne de soutage (14) par recirculation du gaz naturel liquéfié depuis une partie inférieure du réservoir de stockage de gaz naturel liquéfié (3 ; 30) vers la ligne de soutage (14) et retour vers le réservoir de stockage de gaz naturel liquéfié (3) via la ligne de soutage (14) avant que le navire (1) n'arrive à une installation de soutage (2).

4. Système de fonctionnement selon la revendication 3, **caractérisé en ce que** le système comprend un raccordement de purge (19) en connexion fluidique avec la ligne de soutage (14).

5. Système de fonctionnement selon la revendication 3, **caractérisé en ce que** le réservoir de stockage de gaz naturel liquéfié est un réservoir de stockage de gaz naturel liquéfié pressurisé (3) ou un réservoir de stockage de gaz naturel liquéfié (30) sous pression hydrostatique.
